# EUROPEAN PATENT APPLICATION

(11) **EP 4 470 751 A1**
(43) Date of publication of application: **04.12.2024**
(21) Application number: 23746986.1
(22) Date of filing: 25.01.2023
(51) Int. Cl.: B29C 49/64, B29B 11/08, B29B 13/02, B29C 49/06

(54) **TEMPERATURE REGULATING MOLD AND METHOD FOR PRODUCING RESIN CONTAINER**

(30) Priority: 28.01.2022 JP 2022012160
(71) Applicant: Nissei ASB Machine Co., Ltd., Komoro-shi, Nagano 384-8585 (JP)
(72) Inventor: OGIHARA Manabu, Komoro-Shi Nagano 384-8585 (JP); TAKAHASHI Junji, Komoro-Shi Nagano 384-8585 (JP)
(74) Representative: Mewburn Ellis LLP
(86) International application number: PCT/JP2023/002292
(87) International publication number: WO 2023/145775

(57) **Abstract**

A temperature adjustment mold for adjusting a temperature of an injection-molded bottomed preform made of resin includes: an air introduction member that is inserted into the preform and cools the preform by introducing compressed air from an air supply port into an interior of the preform; a cavity mold that accommodates the preform inside and performs heat exchange in contact with an outer peripheral surface of the preform into which the compressed air has been introduced; and a heating mechanism that heats a first portion of the cavity mold facing the air supply port more than a second portion of the cavity mold located on a downstream side of a flow path of the compressed air than the first portion.

## Description

### Technical Field

The present invention relates to a temperature adjustment mold and a manufacturing apparatus for a resin container.

### Background Art

Conventionally, a hot parison type blow-molding apparatus has been known as one of manufacturing apparatuses for a resin container. The hot parison type blow-molding apparatus is configured to blow-mold a resin container using residual heat from injection molding of a preform, and is advantageous in that it is possible to manufacture a resin container which is diversified and excellent in aesthetic appearance as compared with a cold parison type.

In order to shorten the hot parison type molding cycle, for example, it has also been proposed to shorten the injection-molding time of the preform, which is the rate-determining stage (for example, the cooling time of the preform in the injection mold performed after injection (after resin filling)), and to additionally cool the preform at high temperature in a temperature adjustment step after injection molding.

Furthermore, as a method of additional cooling of the preform, a method is also known in which an outer peripheral surface of the preform is brought into contact with a cooling mold in the temperature adjustment step to perform heat exchange, and compressed air is caused to flow into the preform to cool the preform (see Patent Literature 1 to 3) .

### Citation List

### Patent Literature

Patent Literature 1: JP 6505344 B1
Patent Literature 2: WO 2020/158918 A
Patent Literature 3: JP 2509042 B2

### Summary of Invention

### Technical Problem

In this type of additional cooling of the preform, a portion (for example, a portion immediately below the neck portion or a bottom portion of the preform) against which the compressed air introduced into the preform initially blows is relatively strongly cooled, and the amount of heat of the portion is likely to decrease in the temperature adjustment step. That is, the portion strongly cooled in the temperature adjustment step is less likely to stretch during the blow molding due to the decrease in the residual heat, while other regions of the preform (for example, the body portion of the preform) are relatively likely to stretch during the blow molding.

As a result, in the blow-molded container, for example, a lump is formed immediately below the neck portion to be thick, and the body portion tends to be thin. Therefore, there is a possibility that the unevenness of the wall thickness distribution in the vertical direction of the container increases and the quality such as the physical properties and the appearance of the container deteriorates.

Therefore, the present invention has been made in view of such problems, and an object of the present invention is to provide a temperature adjustment mold capable of suppressing local temperature decrease of a preform when air cooling is performed in a temperature adjustment step and improving quality of a blow-molded container.

### Solution to Problem

One aspect of the present invention is a temperature adjustment mold for adjusting a temperature of an injection-molded bottomed preform made of resin. The temperature adjustment mold includes: an air introduction member that is inserted into the preform and cools the preform by introducing compressed air from an air supply port into an interior of the preform; a cavity mold that accommodates the preform inside and performs heat exchange in contact with an outer peripheral surface of the preform into which the compressed air has been introduced; and a heating mechanism that heats a first portion of the cavity mold facing the air supply port more than a second portion of the cavity mold located on a downstream side of a flow path of the compressed air than the first portion.

### Advantageous Effects of Invention

According to one aspect of the present invention, it is possible to provide a temperature adjustment mold capable of suppressing local temperature decrease of a preform when air cooling is performed in a temperature adjustment step and improving quality of a blow-molded container.

### Brief Description of Drawings

Fig. 1 is a view schematically illustrating a configuration of a blow-molding apparatus according to the present embodiment.
Fig. 2 is a longitudinal sectional view illustrating a configuration example of a temperature adjustment unit.
Fig. 3 is a flowchart showing steps of a blow-molding method.
Fig. 4 is a longitudinal sectional view illustrating another configuration example of the temperature adjustment unit.

### Description of Embodiments

Hereinafter, embodiments of the present invention will be described with reference to the drawings.

In the embodiments, for ease of description, structures and elements other than the main parts of the present invention will be described in a simplified or omitted manner. Furthermore, in the drawings, the same elements are denoted by the same reference numerals. Shapes, dimensions, and the like of each element depicted in the drawings are schematically illustrated, and do not indicate actual shapes, dimensions, and the like.

### (Description of blow-molding apparatus)

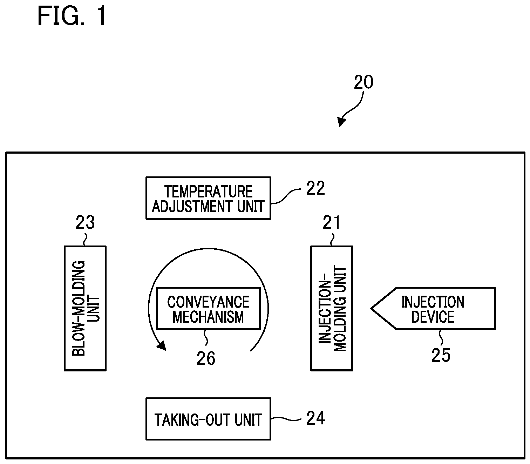

Fig. 1 is a view schematically illustrating a configuration of a blow-molding apparatus 20 according to the present embodiment. The blow-molding apparatus 20 according to the present embodiment is a hot parison type (also referred to as a one-stage type) apparatus that blow-molds a container by utilizing residual heat (internal heat amount, heat amount) from injection molding without cooling a preform to room temperature.

The blow-molding apparatus 20 includes an injection-molding unit 21, a temperature adjustment unit 22, a blow-molding unit 23, a taking-out unit 24, and a conveyance mechanism 26. The injection-molding unit 21, the temperature adjustment unit 22, the blow-molding unit 23, and the taking-out unit 24 are disposed at positions rotated by a predetermined angle (for example, 90 degrees) about the conveyance mechanism 26.

The conveyance mechanism 26 includes a transfer plate 28 (not illustrated in Fig. 1) that moves so as to rotate about an axis in a direction perpendicular to the paper surface of Fig. 1. On the transfer plate 28, one or more neck molds 27 (or a neck-mold fixing plate holding one or more neck molds, both of which are not illustrated in Fig. 1) for holding a neck portion 11 of a preform 10 or the container are disposed at each predetermined angle (for example, for each molding portion). The conveyance mechanism 26 conveys the preform 10 (or the container) having the neck portion 11 held by the neck mold 27 in the order of the injection-molding unit 21, the temperature adjustment unit 22, the blow-molding unit 23, and the taking-out unit 24 by moving the transfer plate 28 by 90 degrees. Note that the conveyance mechanism 26 further includes a mold opening mechanism of the neck mold 27 and the like.

### (Injection-molding unit 21)

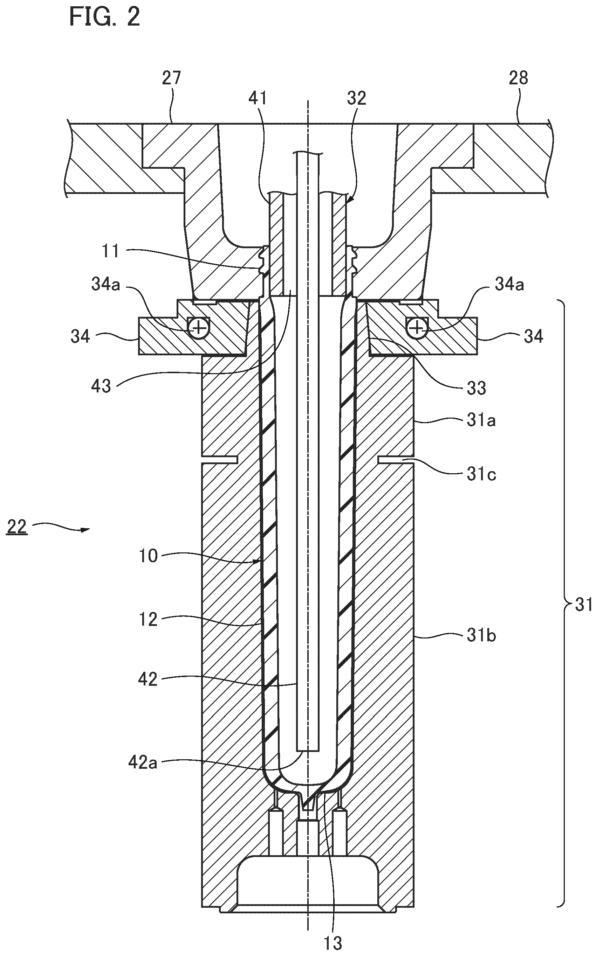

The injection-molding unit 21 includes an injection cavity mold and an injection core mold (which are not illustrated), and manufactures the preform 10 illustrated in Fig. 2 to be described later. An injection device 25 that supplies a resin material, which is a raw material of the preform 10, is connected to the injection-molding unit 21.

In the injection-molding unit 21, the injection cavity mold, the injection core mold, and the neck mold 27 of the conveyance mechanism 26 are closed to form a preform-shaped mold space. Then, by pouring the resin material from the injection device 25 into the mold space having such a preform shape, the preform 10 is manufactured by the injection-molding unit 21.

Here, the entire shape of the preform 10 is a bottomed cylindrical shape in which one end side is opened and the other end side is closed. As illustrated in Fig. 2 described later, the preform 10 includes the neck portion 11 formed on one end side and having an opening, a body portion 12 connected to the neck portion 11 and formed in a cylindrical shape, and a bottom portion 13 connected to the body portion 12 and closing the other end side.

Furthermore, the material of the container and the preform 10 is a thermoplastic synthetic resin, and can be appropriately selected according to the use of the container. Specific examples of the material include polyethylene terephthalate (PET), polyethylene naphthalate (PEN), polycyclohexanedimethylene terephthalate (PCTA), Tritan ((registered trademark): co-polyester manufactured by Eastman Chemical Company), polypropylene (PP), polyethylene (PE), polycarbonate (PC), polyethersulfone (PES), polyphenylsulfone (PPSU), polystyrene (PS), cyclic olefin polymer (COP/COC), polymethyl methacrylate: acrylic (PMMA), polylactic acid (PLA), and the like. The material of the preform 10 and the container in the present application is preferably PET.

Even when the injection-molding unit 21 is mold-opened, the neck mold 27 of the conveyance mechanism 26 is not opened, and the preform 10 is held and conveyed as it is. The number of the preforms 10 simultaneously molded by the injection-molding unit 21 (that is, the number of containers that can be simultaneously molded by the blow-molding apparatus 20) can be appropriately set.

### (Temperature adjustment unit 22)

The temperature adjustment unit 22 performs temperature equalization and removal of uneven temperature of the preform 10 manufactured by the injection-molding unit 21, and adjusts the temperature of the preform 10 so as to have a temperature suitable for blow molding (for example, about 90°C to 105°C) and a temperature distribution suitable for a container shape to be shaped. The temperature adjustment unit 22 also has a function of cooling the preform 10 in a high temperature state after injection molding. In a case where the preform 10 is made of PET, the temperature of the outer surface of the body portion 12 of the preform 10 is 120°C to 160°C at the time of high temperature mold release in the injection-molding unit 21 or at the time of loading into the temperature adjustment unit 22, and the temperature of the inner portion of the body portion 12 becomes still higher than the temperature of the outer surface of the body portion 12. Since crystallization (whitening) occurs when PET in this temperature zone is slowly cooled, it is necessary to suppress whitening by rapidly cooling the preform 10 by the temperature adjustment unit 22.

Fig. 2 is a longitudinal sectional view illustrating a configuration example of the temperature adjustment unit 22. The temperature adjustment unit 22 illustrated in Fig. 2 includes a cavity mold (temperature adjustment pot) 31 capable of accommodating the preform 10, and an air introduction member 32 as an example of a temperature adjustment mold.

The cavity mold 31 is a mold having a temperature adjustment space (cavity surface) capable of accommodating the body portion 12 of the preform 10 manufactured by the injection-molding unit 21. The cavity mold 31 illustrated in Fig. 2 may be divided so that the preform 10 can be temperature-adjusted/cooled at different temperatures along the axial direction (vertical direction), and may include, for example, an upper mold 31a and a lower mold 31b. Furthermore, the temperature adjustment space of the cavity mold 31 may be the same as or different from the appearance shape of the body portion 12 of the preform 10. Examples of the case where the temperature adjustment space of the cavity mold 31 and the appearance shape of the body portion 12 are different from each other include a case where the size (volume) of the temperature adjustment space is larger than the size of the body portion 12 of the preform 10. Note that the cavity mold 31 may have a single-stage configuration without being divided.

The upper mold 31a is a mold that accommodates the upper side of the body portion 12 of the preform 10. The lower mold 31b is a mold disposed below the upper mold 31a and accommodating the lower side of the body portion 12 and the bottom portion 13 of the preform 10.

A heat insulating portion (air heat insulating layer) 31c is provided on the outer peripheral surfaces of the upper mold 31a and the lower mold 31b, and the outer peripheral surface is divided. On the other hand, such a configuration is preferable in which a boundary line (parting line) is not formed on the inner peripheral surfaces (surfaces on which the temperature adjustment space is formed) of the upper mold 31a and the lower mold 31b and the upper mold 31a and the lower mold 31b are not divided. When the cavity mold 31 has a single-stage configuration, the cavity mold 31 is a mold in which the body portion 12 and the bottom portion 13 of the preform 10 are accommodated in a single temperature adjustment space.

A flow path (not illustrated) through which a temperature adjustment medium (refrigerant) flows is formed in an interior of each of the upper mold 31a and the lower mold 31b of the cavity mold 31 having a multi-stage configuration (or the cavity mold 31 having a single-stage configuration). Therefore, the temperature of the upper mold 31a and the lower mold 31b is maintained at a predetermined temperature by the temperature adjustment medium. Note that the temperature of the temperature adjustment medium of the cavity mold 31 is not particularly limited, but can be appropriately selected within a range of, for example, 5°C to 90°C, preferably 30°C to 80°C. In the case of the cavity mold 31 having a multi-stage configuration, each stage mold is set to a different temperature, and in the case of the cavity mold 31 having a single-stage configuration, the cavity mold 31 is set to a single temperature.

Furthermore, the upper end of the upper mold 31a (or the upper end of the cavity mold 31 having a single-stage configuration) has a thin cylindrical stepped portion 33 protruding upward. An opening penetrating the upper mold 31a in the vertical direction to accommodate the body portion of the preform 10 is formed on the inner periphery of the stepped portion 33. The upper end of the stepped portion 33 faces the bottom surface of the neck mold, and the inner periphery of the stepped portion 33 faces the upper end of the body portion of the preform 10 (position immediately below the neck portion).

Here, in Fig. 2, the stepped portion 33 facing the upper end of the body portion of the preform 10 is an example of a first portion of the cavity mold 31. Furthermore, in Fig. 2, the upper mold 31a excluding the stepped portion 33 and the lower mold 31b (or a portion of the cavity mold 31 having a single-stage configuration excluding the stepped portion) are an example of the second portion of the cavity mold 31.

Furthermore, a heating mechanism 34 annularly surrounding a side surface of the stepped portion 33 is attached to an outer peripheral portion of the stepped portion 33. The heating mechanism 34 incorporates a heating member (heating element, for example a ring-shaped heater) 34a, and is attached in contact with a side surface of the stepped portion 33. Furthermore, the heating mechanism 34 can adjust the temperature independently of the temperature adjustment medium, and the temperature thereof is set to be higher than the temperature of the temperature adjustment medium. Although not particularly limited, the temperature of the heating mechanism 34 or the temperature of the stepped portion 33 is set to, for example, about 100°C to 130°C, preferably 100°C to 110°C, and more preferably 100°C to 102°C.

In this manner, the upper end of the body portion 12 of the preform 10 accommodated in the stepped portion 33 is heated by the heat of the heating mechanism 34 via the stepped portion 33. Since the heating mechanism 34 is configured to indirectly heat the preform 10 across the stepped portion 33 of the upper mold 31a, the heating mechanism 34 is not exposed on the inner peripheral surface of the upper mold 31a, and the inner peripheral surface of the upper mold 31a is flush.

The air introduction member 32 has a fitting core 41 and an air flow rod 42, and is inserted into the neck mold 27 and the preform 10. The air introduction member 32 is airtightly abutted against the neck portion 11 of the preform 10 in a state of being inserted into the neck mold 27. The fitting core 41 and the air flow rod 42 are both hollow cylindrical bodies, and the air flow rod 42 is disposed concentrically inside the fitting core 41.

The fitting core 41 is in close contact with the inner periphery or the upper end surface of the neck portion 11 when the air introduction member 32 is inserted into an interior of the neck mold 27, and maintains airtightness between the preform 10 and the air introduction member 32.

The distal end of the fitting core 41 is inserted or abutted to the position of the neck portion 11 of the preform 10. Furthermore, an opening 43 for introducing compressed air (air or gaseous refrigerant) into the preform 10 is formed at the distal end of the fitting core 41. The opening 43 illustrated in Fig. 2 is an example of an air supply port. Furthermore, a space formed between the fitting core 41 and the air flow rod 42 constitutes a flow path for air supply connected to an air source (not illustrated).

The distal end of the air flow rod 42 is inserted to the vicinity of the bottom surface of the preform 10. An opening 42a for exhausting compressed air from the inside of the preform 10 is formed at the distal end of the air flow rod 42 facing the bottom portion 13 of the preform 10. Therefore, the interior of the air flow rod 42 constitutes a flow path for exhaust.

### (Blow-molding unit 23)

Returning to Fig. 1, the blow-molding unit 23 performs stretch blow-molding on the preform 10 whose temperature has been adjusted by the temperature adjustment unit 22 to manufacture a container.

The blow-molding unit 23 includes a blow cavity mold which is a pair of split molds corresponding to the shape of the container, a bottom mold, a stretching rod, and an air introduction member (blow core mold, both of which are not illustrated) for blow air supply. The blow-molding unit 23 blow-molds the preform 10 while stretching the preform. As a result, the preform 10 is shaped into the shape of the blow cavity mold, and a container can be manufactured.

### (Taking-out unit 24)

The taking-out unit 24 is configured to release the neck portion of the container manufactured by the blow-molding unit 23 from the neck mold 27 and take out the container to the outside of the blow-molding apparatus 20.

### (Description of blow-molding method)

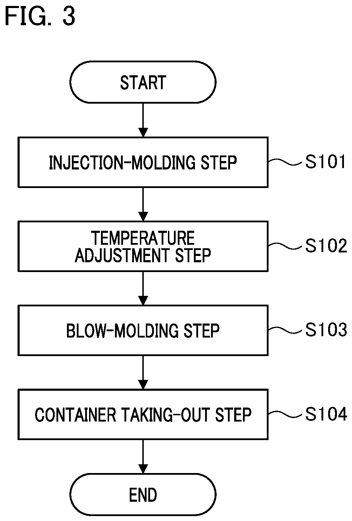

Next, a blow-molding method by the blow-molding apparatus of the present embodiment will be described. Fig. 3 is a flowchart showing steps of a blow-molding method.

### (Step S101: Injection-molding step)

First, in the injection-molding unit 21, a resin is injected from the injection device 25 into a preform-shaped mold space formed by the injection cavity mold, the injection core mold, and the neck mold 27 of the conveyance mechanism 26, thereby manufacturing the preform 10.

Then, the injection mold of the injection-molding unit 21 is opened after completion of injection (filling and pressure holding) of the resin material or after a minimum cooling time provided after completion of injection.

From the viewpoint of manufacturing the container by a high-speed molding cycle, it is preferable to perform mold opening without providing a cooling time of the preform 10 in the injection mold after completion of injection (filling and pressure holding) of the resin material in step S101.

On the other hand, when the preform 10 is minimally cooled in the injection mold, the time for cooling the resin material (cooling time) after completion of injection of the resin material by the injection-molding unit 21 is preferably 1/2 or less of the time for injecting the resin material (injection time). Furthermore, the cooling time can be made shorter than the time for injecting the resin material depending on the weight of the resin material. For example, the cooling time is more preferably 2/5 or less, still more preferably 1/4 or less, and particularly preferably 1/5 or less with respect to the injection time of the resin material.

In the present embodiment, since there is no cooling time of the preform 10 in the injection mold (or the cooling time is very short), the skin layer (surface layer in a solidified state) of the preform is thin and the core layer (inner layer in a softened state or a molten state) is formed thick as compared with a case where the preform is sufficiently cooled in the injection mold. That is, in the present embodiment, the preform 10 having a large thermal gradient between the skin layer and the core layer and having high residual heat at a high temperature is formed.

When the injection mold is opened in step S101, the preform 10 is released from the injection cavity mold and the injection core mold in a high temperature state in which the outer shape can be maintained. Thereafter, the transfer plate 28 of the conveyance mechanism 26 moves so as to rotate by a predetermined angle, and the preform 10 in the high temperature state held by the neck mold 27 is conveyed to the temperature adjustment unit 22.

### (Step S102: Temperature adjustment step)

Next, in the temperature adjustment unit 22, cooling and temperature adjustment for bringing the temperature of the preform 10 close to a temperature (blow temperature) suitable for the final blow are performed.

In the temperature adjustment unit 22, the temperature of the preform 10 is lowered to the blow temperature, and then the temperature of the preform 10 is maintained at the blow temperature until blow molding is performed. By rapidly cooling the preform with a high temperature by the temperature adjustment unit 22, whitening (becoming clouded) due to spherulite formation crystallization that may occur when the preform is slowly cooled is suppressed.

In the temperature adjustment unit 22, as illustrated in Fig. 2, first, the preform 10 is accommodated in the cavity mold 31. Subsequently, the air introduction member 32 is inserted into the neck portion 11 of the preform 10 accommodated in the cavity mold 31. At this time, the neck portion 11 of the preform 10 and the fitting core 41 are brought into close contact with each other to enter a state in which airtightness is maintained therebetween.

Thereafter, cooling blow of the preform 10 is performed. In the cooling blow of the present embodiment, the compressed air is introduced to the neck portion 11 side of the preform 10 through the opening 43 of the fitting core 41, and the compressed air is exhausted from the bottom portion 13 side of the preform 10 through the opening 42a of the air flow rod 42. Before the cooling blow, preliminary blow may be performed in order to uniformly bring the outer surface of the preform 10 into contact with the temperature adjustment space of the cavity mold 31. In the preliminary blow, the compressed air is not exhausted, and the compressed air may be introduced from either the opening 43 of the fitting core 41 or the opening 42a of the air flow rod 42.

As a result, the compressed air flows from the neck portion 11 side toward the bottom portion 13 side in the preform 10, and the preform 10 is cooled from the inside by the compressed air. In the cooling blow, since the compressed air is ejected from the opening 43 of the fitting core 41, the compressed air first comes into contact with the upper end of the body portion (immediately below the neck portion) of the preform 10 facing the opening 43 of the fitting core 41. The temperature of the compressed air gradually increases toward the bottom portion along the axial direction by heat exchange with the preform 10. Therefore, in the cooling blow, the upper end of the body portion (immediately below the neck portion) of the preform 10 is strongly cooled as compared with the bottom portion of the preform 10 and the lower side of the body portion.

In addition, the preform 10 in the temperature adjustment unit 22 continues to contact the cavity mold 31 maintained at a predetermined temperature by receiving the pressure of the compressed air from the inside, and heat exchange (that is, cooling and temperature adjustment of the preform 10) is also performed between the preform 10 and the cavity mold 31. As a result, the temperature of the preform 10 is adjusted so as not to become equal to or lower than a temperature suitable for blow molding from the outside, and the uneven temperature generated from injection molding is also reduced. Note that the shape of the preform 10 in the temperature adjustment step is maintained by the cavity mold 31 and does not greatly change.

Here, in the upper mold 31a of the cavity mold 31, the heating mechanism 34 set to a temperature higher than the temperature of the temperature adjustment medium is attached to the outer peripheral portion of the stepped portion 33 facing the upper end of the body portion of the preform 10. While the upper end of the body portion of the preform 10 is strongly cooled by the cooling blow, the upper end of the body portion is locally heated from the outside by the heat of the heating mechanism 34 via the stepped portion 33, so that a local temperature decrease at the upper end of the body portion of the preform 10 is suppressed. As a result, the upper end of the body portion of the preform 10 can maintain the residual heat required for the blow molding even when strongly cooled by the cooling blow.

After the temperature adjustment step, the transfer plate 28 of the conveyance mechanism 26 moves so as to rotate by a predetermined angle, and the preform 10 after the temperature adjustment held in the neck mold 27 is conveyed to the blow-molding unit 23.

### (Step S103: Blow-molding step)

Subsequently, the blow molding of the container is performed in the blow-molding unit 23.

First, the blow cavity mold is closed, the preform 10 is accommodated in the mold space, and an air introduction member (blow core) for supplying blow air is lowered, so that the air introduction member abuts on the neck portion 11 of the preform 10. Then, the stretching rod (longitudinal axis stretching member) is lowered to hold the bottom portion 13 of the preform 10 from the inner surface and the preform 10 is laterally axially stretched by supplying blow air from the air introduction member while performing longitudinal axis stretching as necessary. As a result, the preform 10 is bulged and shaped so as to be in close contact with the mold space of the blow cavity mold, and is blow-molded into the container. Note that the bottom mold stands by at a lower position not in contact with the bottom portion of the preform 10 before closing the blow cavity mold, and quickly rises to the molding position before closing the mold or after closing the mold.

### (Step S104: Container taking-out step)

When the blow molding is finished, the blow cavity mold and the bottom mold are opened. As a result, the container is movable from the blow-molding unit 23.

Subsequently, the transfer plate 28 of the conveyance mechanism 26 moves so as to rotate by a predetermined angle, and the container is transported to the taking-out unit 24. In the taking-out unit 24, the neck portion of the container is released from the neck mold 27, and the container is taken out to the outside of the blow-molding apparatus 20.

Thus, a series of steps of the blow-molding method is completed. Thereafter, by moving the transfer plate 28 of the conveyance mechanism 26 so as to rotate by a predetermined angle, the respective steps of S101 to S104 described above are repeated. During the operation of the blow-molding apparatus 20, manufacturing of four sets of containers having a time difference of one step is executed in parallel.

Note that, due to the structure of the blow-molding apparatus 20, the times during which the transfer plate 28 is stopped in the injection-molding unit 21, the temperature adjustment unit 22, the blow-molding unit 23, and the taking-out unit 24 are the same in length. Similarly, the conveyance times of the transfer plate 28 between the respective units are the same in length.

Hereinafter, functions and effects of the present embodiment will be described.

In the temperature adjustment unit 22 of the present embodiment, the preform 10 having no cooling time (or very short cooling time) in the injection mold is accommodated in the cavity mold 31, and the preform 10 is cooled and temperature-adjusted by cooling blow in which compressed air is blown into the preform 10 by the air introduction member 32. A heating mechanism 34 is provided in a first portion of the cavity mold 31 facing the air supply port of the compressed air (the stepped portion 33 of the upper mold 31a (or the upper portion of the cavity mold 31 having a single-stage configuration)). In the temperature adjustment unit 22, the portion (upper end of the body portion) of the preform 10 with which the compressed air first comes into contact is strongly cooled at the time of cooling blow, but is locally heated from the outside by the heating mechanism 34 of the cavity mold 31, so that it is possible to maintain the residual heat necessary for blow molding.

Therefore, in the present embodiment, since it is possible to suppress an event in which a portion of the preform 10 with which the compressed air comes into contact first becomes difficult to stretch during blow molding, it is possible to blow-mold a high-quality container with less unevenness in the thickness distribution in the vertical direction.

Furthermore, in the present embodiment, it is possible to suppress a decrease in the temperature of the portion of the preform 10 with which the compressed air comes into contact first at the time of cooling blow in the temperature adjustment unit 22, and thus, it is not necessary to apply a preform having a special shape in which the thickness of the portion (for example, immediately below the neck portion or the upper end of the body portion) is increased in order to leave sufficient residual heat. When this type of preform having a special shape is applied, there is a restriction that the appearance immediately below the neck portion of the container becomes a step portion (stepped portion). Furthermore, even when the preform having this special shape is used, the thick portion of the preform is not fully stretched at the time of blow molding, and a lump is formed immediately below the neck portion of the container or the like, and unevenness may occur in the thickness distribution in the vertical direction of the container. On the other hand, in the present embodiment, it is possible to avoid the above-described event that may occur when a preform having a special shape is applied.

Furthermore, since the heating mechanism 34 of the present embodiment indirectly heats the preform 10 from the outside of the stepped portion 33 without being exposed on the inner peripheral surface of the upper mold 31a (or the cavity mold 31 having a single-stage configuration), there is no parting line by the heating mechanism 34 on the inner peripheral surface of the upper mold 31a (or the cavity mold 31 having a single-stage configuration). Therefore, even if the heating mechanism 34 is provided in the temperature adjustment unit 22, no parting line is formed in the preform 10, and the trace of the cavity mold 31 is less likely to remain in the container after blow molding, so that the quality of the container can be further improved.

Note that the heat amount of the upper end of the body portion of the preform 10 gradually moves to the neck mold 27 having a relatively low temperature via the neck portion 11, and the temperature decreases during molding. This phenomenon occurs regardless of the direction of the compressed air at the time of cooling blow. Therefore, even in a case where the compressed air is introduced from the air flow rod 42 and exhausted from the opening 43 of the fitting core 41 (even in a case where the compressed air is introduced from the bottom portion 13), the configuration in which the heating mechanism 34 is provided at the upper portion of the cavity mold 31 is effective for suppressing or maintaining the decrease in the residual heat at the upper end of the body portion of the preform 10.

The present invention is not limited to the above embodiments, and various improvements and design changes may be made without departing from the gist of the present invention.

In the above embodiment, the example has been described in which the compressed air is introduced from the neck portion 11 side of the preform 10 and the compressed air is exhausted from the bottom portion 13 side of the preform 10. However, the flow of the compressed air in the cooling blow is not limited to the above.

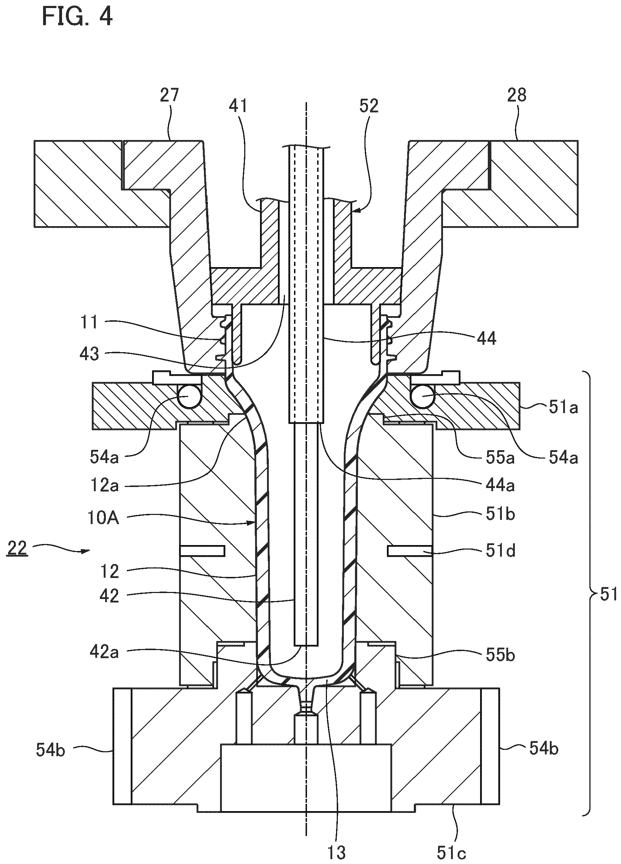

Fig. 4 is a longitudinal sectional view illustrating another configuration example of the temperature adjustment unit 22. The temperature adjustment unit 22 illustrated in Fig. 4 illustrates a configuration example in which compressed air is introduced from the neck portion 11 side and the bottom portion 13 side of a preform 10A. Furthermore, the preform 10A in Fig. 4 has a reduced diameter portion (an example of the upper end of the body portion) 12a on the upper end side of the body portion immediately below the neck portion 11, and has a shape in which the inner diameter of the body portion 12 is smaller than the inner diameter of the neck portion 11. Note that, in the description of Fig. 4, the same reference numerals are given to elements common to the configuration of Fig. 2, and redundant description is omitted.

The cavity mold 51 of the temperature adjustment unit 22 illustrated in Fig. 4 is a mold having a temperature adjustment space having substantially the same shape as the preform 10A manufactured by the injection-molding unit 21. The cavity mold 51 is divided in the axial direction of the preform 10A and includes an upper mold 51a, a middle mold 51b, and a lower mold 51c. The middle mold 51b is disposed on the lower mold 51c, and the upper mold 51a is disposed on the middle mold 51b. Furthermore, the bottom surface of the upper mold 51a and the upper surface of the middle mold 51b are engaged with each other by a spigot joint 55a, and the bottom surface of the middle mold 51b and the upper surface of the lower mold 51c are engaged with each other by a spigot joint 55b.

The upper mold 51a is a mold that accommodates the reduced diameter portion 12a at the upper end of the body portion of the preform 10A, and the upper surface of the upper mold 51a faces the bottom surface of the neck mold 27. The upper mold 51a includes a first heating mechanism 54a, and the first heating mechanism 54a incorporates a first heating member (heating element, ring-shaped heater).

The middle mold 51b is a mold that accommodates the body portion 12 below the reduced diameter portion 12a in the preform 10A. A flow path (not illustrated) through which a temperature adjustment medium (refrigerant) flows is formed in an interior of the middle mold 51b. Therefore, the temperature of the middle mold 51b is maintained at a predetermined temperature by the temperature adjustment medium similarly to the cavity mold 31 of Fig. 2 (for example, 5°C to 90°C, preferably 30°C to 80°C). Note that the middle mold 51b may include a plurality of temperature adjustment mechanisms in the axial direction (vertical direction) so that the body portion 12 of the preform can be adjusted or cooled to different temperatures in the axial direction (vertical direction). For example, in Fig. 4, a heat insulating portion (air heat insulating layer) 51d is provided on the outer peripheral surface of the middle mold 51b, and the outer peripheral surface of the middle mold 51b is divided. On the other hand, no boundary line (parting line) is formed on the inner peripheral surface (surface on which the temperature adjustment space is formed) of the middle mold 51b.

The lower mold 51c is a mold that accommodates the bottom portion 13 of the preform 10A. A second heating mechanism 54b is attached to the lower mold 51c. The second heating mechanism 54b incorporates a second heating member (heating element, for example, band heater).

In Fig. 4, the upper mold 51a and the lower mold 51c are examples of the first portion of the cavity mold 51. Furthermore, in Fig. 4, the middle mold 51b is an example of a second portion of the cavity mold 51.

The first heating mechanism 54a and the second heating mechanism 54b illustrated in Fig. 4 are examples of heating mechanisms, and can adjust the temperature independently of the temperature adjustment medium, and the temperature thereof is set to be higher than the temperature of the temperature adjustment medium. Although not particularly limited, the temperature of the first heating mechanism 54a or the upper mold 51a and the temperature of the second heating mechanism 54b or the lower mold 51c are set to, for example, 100°C to 130°C, preferably 100°C to 110°C, and more preferably about 100°C to 102°C.

In the temperature adjustment unit 22 of Fig. 4, the air introduction member 52 is inserted into the neck mold 27 and the preform 10A. The air introduction member 52 is different from the air introduction member 32 of Fig. 2 in that a rod outer pipe (second air flow rod) 44 is provided between the inner periphery of the fitting core 41 and the outer periphery of the air flow rod 42. Note that the air introduction member 32 illustrated in Fig. 2 may be combined with the cavity mold 51 in Fig. 4 to constitute the temperature adjustment unit 22.

The air flow rod 42 and the rod outer pipe 44 are concentrically disposed on the inner peripheral side of the fitting core 41. As a result, flow paths of compressed air are formed between the fitting core 41 and the rod outer pipe 44, between the rod outer pipe 44 and the air flow rod 42, and in an interior of the air flow rod 42. Furthermore, when the air introduction member 52 is inserted into the preform 10A, the distal end of the rod outer pipe 44 is located near the boundary between the upper mold 51a and the middle mold 51b (the lower end of the reduced diameter portion 12 of the preform 10A).

In the air introduction member 52 of Fig. 4, a space between the fitting core 41 and the rod outer pipe 44, and the interior of the air flow rod 42 each constitute a flow path for supplying air, and a space between the rod outer pipe 44 and the air flow rod 42 constitutes a flow path for exhaust.

That is, in the temperature adjustment unit 22 of Fig. 4, the compressed air is introduced to the bottom portion 13 side of the preform 10A through the opening 42a of the air flow rod 42 at the time of cooling blow, and the compressed air is also introduced from the neck portion 11 side of the preform 10A through the opening 43 of the fitting core 41. Then, the compressed air introduced into the preform 10A is exhausted from the opening 44a at the distal end of the rod outer pipe 44. The outer surface of the body portion 12 of the preform 10 and the accommodation space (cavity surface) of the preform of the cavity mold 51 may be brought into close contact with each other by performing the preliminary blow before the cooling blow.

As a result, in the preform 10A, a flow of compressed air from the neck portion 11 side toward the lower end of the reduced diameter portion 12 and a flow of compressed air from the bottom portion 13 side toward the lower end of the reduced diameter portion 12 are generated, and the preform 10A is cooled from the inside by these flows of compressed air.

Furthermore, the preform 10A in the temperature adjustment unit 22 continues to come into contact with the cavity mold 51 maintained at a predetermined temperature by receiving the pressure of the compressed air from the inside, and heat exchange (that is, cooling and temperature adjustment of the preform 10A) is also performed between the preform 10A and the cavity mold 51.

In the example of Fig. 4, since the compressed air is ejected from the opening 42a of the air flow rod 42, the compressed air first comes into contact with the bottom portion 13 of the preform 10A, and the bottom portion 13 of the preform 10A is cooled more strongly than the body portion 12 of the preform 10A. On the other hand, since the lower mold 51c of the cavity mold 51 is adjusted to a temperature higher than the temperature of the temperature adjustment medium by the second heating mechanism 54b, a local temperature decrease of the bottom portion 13 of the preform 10A is suppressed. As a result, formability of the blow-molded container bottom portion and transferability of patterns, engraved marks, and the like are improved.

Similarly, in the example of Fig. 4, since the compressed air is also ejected from the opening 43 of the fitting core 41, the reduced diameter portion 12a facing the neck portion 11 of the preform 10A is also strongly cooled. However, since the upper mold 51a facing the reduced diameter portion 12a is also heated by the first heating mechanism 54a, a local temperature decrease of the reduced diameter portion 12a of the preform 10A is also suppressed.

As described above, the reduced diameter portion 12a and the bottom portion 13 of the preform 10A illustrated in Fig. 4 can maintain the residual heat required for blow molding even when strongly cooled by cooling blow.

Note that a stepped portion extending in the upward direction of the middle mold 51b may be provided, and a heating mechanism corresponding to the neck portion 11 of the preform 10 may be provided in the stepped portion. In addition, a stepped portion extending in the downward direction of the middle mold 51b may be provided, and a heating mechanism corresponding to the bottom portion 13 of the preform 10 may be provided in the stepped portion. As a result, no parting line is formed in the preform 10, and traces of the cavity mold 51 are less likely to remain in the container after blow molding.

Furthermore, the cavity mold 51 illustrated in Fig. 4 may have a single-stage configuration without being divided into the upper mold 51a, the middle mold 51b, and the lower mold 51c. Then, the first heating mechanism 54a may be provided at the upper portion of the cavity mold 51 (position corresponding to the upper end of the body portion 12 of the preform 10), and the second heating mechanism 54b may be provided at the lower portion of the cavity mold 51 (position corresponding to the bottom portion 13 of the preform 10).

Furthermore, the first heating member incorporated in the first heating mechanism 54a may be a band heater or an infrared heater in addition to the ring-shaped heater.

In addition, the embodiments disclosed herein are to be considered in all respects as illustrative and not restrictive. The scope of the present invention is indicated not by the above description but by the claims, and it is intended that meanings equivalent to the claims and all modifications within the scope are included.

### Reference Signs List

10, 10A Preform
20 Blow-molding apparatus
21 Injection-molding unit
22 Temperature adjustment unit
23 Blow-molding unit
31, 51 Cavity mold
32, 52 Air introduction member
34, 54a, 54b Heating mechanism

## Claims

1. A temperature adjustment mold for adjusting a temperature of an injection-molded bottomed preform made of resin, the temperature adjustment mold comprising:
an air introduction member that is inserted into the preform and cools the preform by introducing compressed air from an air supply port into an interior of the preform;
a cavity mold that accommodates the preform inside and performs heat exchange in contact with an outer peripheral surface of the preform into which the compressed air has been introduced; and
a heating mechanism that heats a first portion of the cavity mold facing the air supply port more than a second portion of the cavity mold located on a downstream side of a flow path of the compressed air than the first portion.

2. The temperature adjustment mold according to claim 1, wherein
the air introduction member introduces the compressed air from a side of a neck portion of the preform, and
the heating mechanism heats a portion facing an upper end of a body portion of the preform connected to the neck portion.

3. The temperature adjustment mold according to claim 1, wherein
the air introduction member introduces the compressed air from a side of a bottom portion of the preform, and
the heating mechanism heats a portion facing the bottom portion of the preform.

4. The temperature adjustment mold according to any one of claims 1 to 3, wherein
the cavity mold has a stepped portion in which an outer peripheral portion of the first portion is smaller in diameter than an outer peripheral portion of the second portion, and
the heating mechanism is disposed to surround the stepped portion.

5. A manufacturing apparatus for a resin container, the manufacturing apparatus comprising:
an injection-molding unit that injection-molds a preform made of resin;
a temperature adjustment unit that has the temperature adjustment mold according to any one of claims 1 to 4 and adjusts a temperature of the preform that has been manufactured by the injection-molding unit; and
a blow-molding unit that blow-molds the preform that has been adjusted in temperature to manufacture a resin container.
